# EUROPÄISCHE PATENTSCHRIFT

(11) **EP 4 062 517 B1**
(45) Veröffentlichungstag und Bekanntmachung des Hinweises auf die Patenterteilung: **10.09.2025**
(21) Anmeldenummer: 20807328.8
(22) Anmeldetag: 12.11.2020
(51) Int. Cl.: H02J 9/00, B63G 8/00, H02J 7/00

(54) **ÜBERBRÜCKUNG EINES BATTERIEMANAGEMENTSYSTEMS IN EINEM UNTERSEEBOOT IM GEFAHRENFALL**
BYPASSING A BATTERY MANAGEMENT SYSTEM IN A SUBMARINE IN THE EVENT OF AN EMERGENCY
CONTOURNEMENT D'UN SYSTÈME DE GESTION DE BATTERIE DANS UN SOUS-MARIN EN CAS D'URGENCE

(30) Priorität: 19.11.2019 DE 102019217796
(43) Veröffentlichungstag der Anmeldung: 28.09.2022
(73) Patentinhaber: TKMS GmbH, 24143 Kiel (DE); thyssenkrupp AG, 45143 Essen (DE)
(72) Erfinder: PEIN, Marc, 24147 Kiel (DE); NAGORNY, Boris, 22926 Ahrensburg (DE)
(74) Vertreter: thyssenkrupp Intellectual Property GmbH
(86) Internationale Anmeldenummer: PCT/EP2020/081900
(87) Internationale Veröffentlichungsnummer: WO 2021/099204

(56) Entgegenhaltungen:
- EP-A2- 1 641 066
- JP-A- 2016 163 536

## Beschreibung

Die Erfindung betrifft ein Verfahren zur Überbrückung eines Batteriemanagementsystems im Gefahrenfall, um einem Unterseeboot im Gefahrenfall Energie für entsprechend notwendige Manöver zur Verfügung zu stellen.

Akkumulatoren auf Lithium-Basis sind zunehmend interessant, beispielsweise aufgrund der hohen Energiedichte. Gerade für große Energiespeicher gibt es jedoch zwei grundlegende Unterschiede beispielsweise zum Blei-Schwefelsäure-Akkumulator. Zum einen können die einzelnen Zellen nicht einfach beliebig vergrößert werden. Dieses führt dazu, dass regelmäßig eine Vielzahl von Akkumulatoren zu einem größeren Modul zusammengestellt wird. Zum anderen ist gerade bei diesen Akkumulatoren das Problem des thermischen Durchgehens gegeben. Da hierbei auch eine große Menge an Gas entsteht, bedeutet dieses ein großes Risiko, insbesondere in kritischen Umgebungen, wie sich beispielsweise an Akkumulatoren in Luftfahrzeugen gezeigt hat.

Um die Akkumulatoren zu schützen, werden Batteriemanagementsysteme eingesetzt. Ein Batteriemanagementsystem verhindert insbesondere eine Tiefentladung, welche zu einer Beschädigung der Akkumulatoren führen könnte, sowie eine zu starke Leistungsabfuhr, welche zu einem Überhitzten und damit zum thermischen Durchgehen führen könnte. Somit sichert ein Batteriemanagementsystem die Akkumulatoren und sorgt für eine lange Lebensdauer. Gleichzeitig wird auch die Umgebung damit geschützt, damit somit ein Brand regelmäßig vermieden werden kann.

Es kann jedoch Gefahrensituationen geben, in denen es wichtiger sein kann, die noch zur Verfügung stehenden Energiereserven zu nutzen und dafür eine Beschädigung der Akkumulatoren durch eine Tiefentladung und sogar einen Brand billigend in Kauf zu nehmen. Ein Beispiel hierfür ist ein Unterseeboot, welches getaucht und missionsbedingt ohne Energiereserven ist. In diesem Fall ist es zweckdienlich, die durch Tiefentladung noch zur Verfügung stehen Energiereserven zu nutzen, um das Unterseeboot auftauchen zu lassen, um die Mannschaft evakuieren zu können.

Ein wichtiger Punkt ist hierbei jedoch, dass eine solche Übersteuerung im Normalfall ein sehr hohes Risiko darstellt, wenn diese Übersteuerung außerhalb eines solchen Gefahrenfalls aktiviert werden würde und somit alle Sicherheitssysteme deaktiviert werden würden.

Weiter erschwerend kommt hinzu, dass eine solche Übersteuerung erst in einem Zustand benötigt wird, in welchen bereits kaum noch Energie zur Verfügung steht. Insbesondere ist die von einem Akkumulator zur Verfügung gestellt Spannung abhängig vom Ladezustand und sinkt gerade bei sehr geringen Ladezuständen deutlich ab. Hierdurch wird aber möglicherweise die Spannung, welche für eine Schaltung der Steuerelektronik notwendig ist, unterschritten oder die Spannung ist nicht stabil genug um einen Schaltvorgang durchzuführen. Ein Verbinden des Akkumulators mit dem elektrischen Netz ist dann aus eigener Kraft nicht mehr möglich.

Aus der DE 10 2004 045 897 A1 ist eine Batterieanlage eines Unterseebootes mit zumindest zwei Batteriemodulen bekannt, welche jeweils die Bordnetzspannung des Unterseebootes haben und jeweils über einen Schalter mit dem Bordnetz des Unterseebootes verbunden sind, welcher es ermöglicht, das zugehörige Batteriemodul dem Bordnetz zu- und abzuschalten.

Aus der DE 101 06 521 C1 ist ein Torpedo mit einer Batterie zur Stromversorgung bekannt.

Aus der DE 10 2017 009 527 A1 ist ein Fahrnetz eines Unterseebootes zur Versorgung einer Fahranlage mit elektrischer Energie bekannt, wobei der Fahranlage zur Übertragung der elektrischen Energie mindestens zwei Gleichspannungswandler zugeordnet sind.

Aus der JP 2016 163536 A ist eine Energiebereitstellung für ein mobiles Objekt bekannt.

Aus der EP 1 641 066 A2 ist eine Batterieanlage eines Unterseebootes bekannt.

Aufgabe der Erfindung ist es, ein Verfahren zur Bereitstellung der letzten Energiereserven auf einem Unterseeboot bereitzustellen, wodurch im Gefahrenfall unter Inkaufnahme der Beschädigung der Akkumulatoren die letzten Energiereserven verwendet werden können, um beispielsweise das Unterseeboot noch auftauchen lassen zu können und so die Besatzung zu evakuieren.

Gelöst wird diese Aufgabe durch das Verfahren mit den in Anspruch 1 angegebenen Merkmalen sowie durch die Energiespeichervorrichtung mit den in Anspruch 6 angegebenen Merkmalen. Vorteilhafte Weiterbildungen ergeben sich aus den Unteransprüchen, der nachfolgenden Beschreibung sowie den Zeichnungen.

Für das erfindungsgemäße Verfahren zur Bereitstellung von Energie auf einem Unterseeboot wird ein Unterseeboot mit einer Energiespeichervorrichtung ausgewählt. Die Energiespeichervorrichtung weist wenigstens einen ersten Akkumulator und ein erstes Batteriemanagementsystem auf. Das erste Batteriemanagementsystem kontrolliert den ersten Akkumulator und verhindert so insbesondere Überhitzen, Tiefentladen und Überladung und somit eine Beschädigung des ersten Akkumulators. Dieses entspricht der normalen Funktionsweise eines Batteriemanagementsystems. Zur Bereitstellung der Energie wird eine Überbrückung des ersten Batteriemanagementsystems des ersten Akkumulators durchgeführt. Dieses dient zur Ermöglichung einer Tiefentladung des ersten Akkumulators. Hierdurch kann im Gefahrenfall auch der letzte Rest an gespeicherter elektrischer Energie zur Verfügung gestellt werden, wobei die dauerhafte Beschädigung des ersten Akkumulators und gegebenenfalls auch ein durch ein thermisches Durchgehen ausgelöster Brand billigend in Kauf genommen wird. Als erster Akkumulator wird ein entladener erster Akkumulator ausgewählt. Entladen ist in diesem Zusammenhang so zu verstehen, dass der erste Akkumulator soweit entladen ist, dass das Batteriemanagementsystem zum Schutz vor einer Tiefentladung und damit einer möglichen Beschädigung des ersten Akkumulators, eine weitere Entladung dieses Akkumulators verhindert, indem es den ersten Akkumulator beispielsweise von einem Lastausgang trennt. Das Batteriemanagementsystem hat insbesondere den ersten Akkumulator mit einem ersten Lastschalter von einem Lastausgang der Energiespeichervorrichtung getrennt. Ein entladener Akkumulator im Sinne der Erfindung ist somit nie wirklich vollständig und absolut entladen, sondern weist immer noch eine gewisse Restladung auf, während ein tiefentladener Akkumulator im Sinne der Erfindung keine an die angeschlossenen Verbraucher abgebbare Restladung mehr aufweist. Der Akkumulator kann selbst im tiefentladenen Zustand noch eine elektrische Minimalladung aufweisen, diese kann aber aufgrund der geringen Spannung im Akkumulator und aufgrund der elektrischen Eigenschaften der angeschlossenen Verbraucher nicht mehr ausgenutzt werden, da kein Strom mehr an diese abgegeben werden kann, obwohl die Verbraucher elektrisch mit dem Akkumulator verbunden sind. Entladen bedeutet in diesem Zusammenhang beispielsweise, dass der Akkumulator nur noch eine Spannung aufweist, die im Batteriemanagementsystem als Grenzwert, in Form der Entladeschlussspannung, vorgegeben ist, sodass der Akkumulator durch das Batteriemanagementsystem vom Netz getrennt und so vor weitere Entladung geschützt wurde. Der erste Akkumulator wurde somit durch das mit ihm verbundene erste Batteriemanagementsystem vom Lastausgang der Energiespeichervorrichtung getrennt, damit keine weitere elektrische Ladung entnommen und somit der erste Akkumulator nicht tiefentladen und beschädigt wird. Zur Überbrückung des ersten Batteriemanagementsystems wird ein Notschalter verwendet, wobei durch den Notschalter eine Schaltspannung auf einen ersten Lastschalter angelegt (oder gegeben) wird. Durch das Aufprägen der Spannung auf den ersten Lastschalter verbindet der erste Lastschalter den ersten Akkumulator mit einem Lastausgang der Energiespeichervorrichtung.

Akkumulator im Sinne des erfindungsgemäßen Verfahrens kann eine einzelne elektrochemische Zelle (ein Sekundärelement) sein. Es kann sich aber auch um ein Modul handeln, welches aus mehreren Akkumulatoren zusammengesetzt ist. Ebenso kann es sich auch um einen sogenannten Strang handeln, bei dem mehrere Module zusammengeschaltet sind.

Der Begriff Notschalter dient im Sinne der Erfindung dazu diesen Schalter eindeutig zu benennen und ihn damit sprachlich von anderen Schaltern zu unterscheiden. Der Notschalter kann dabei als einen Schalter wie ein Notausschalter konstruiert sein, er kann als mechanisch gegen unbeabsichtigtes Schalten gesicherter Schalter, zum Beispiel als Schlüsselschalter, konstruiert sein oder er kann auch als Schaltlogik softwaretechnisch angesteuert sein. Bevorzugt handelt es sich bei dem Notschalter jedoch um einen manuell betätigbaren Schalter, da dieser nur in extremen Notsituationen eingesetzt werden wird.

Tiefentladung im Sinne der Erfindung ist die Entnahme von Strom aus dem Akkumulator bis zur nahezu vollständigen Erschöpfung der Kapazität des Akkumulators. Die Tiefentladung erfolgt bis unterhalb der Entladeschlussspannung und kann soweit erfolgen, wie es technisch aufgrund der elektrischen Eigenschaften des angeschlossenen Netzes und seiner Verbraucher möglich ist.

Erfindungswesentlich ist, dass durch die Überbrückung des Batteriemanagementsystems eine Lastverbindung zwischen dem ersten Akkumulator und einem Lastausgang und damit einem Netz geschaffen wird, um die gesamte gespeicherte Energie aus dem ersten Akkumulator abgeben zu können ohne dass eine Sicherungseinrichtung die Energieabgabe akkumulatorseitig begrenzt. Insbesondere soll ein Batteriemanagementsystem gerade einen Akkumulator von einem Verbraucher trennen, wenn beispielsweise die Temperatur am Akkumulator zu hoch ist oder die Restkapazität zu gering ist, um den Akkumulator vor einer Beschädigung zu schützen. Im einfachsten Fall arbeitet das Batteriemanagementsystem weiter, kann aber den Akkumulator nicht mehr trennen, beispielsweise, weil eine parallel geschaltete Verbindung zum Verbraucher hergestellt wird oder weil eine Steuerleitung vom Batteriemanagementsystem zu einem Schaltelement durch die Überbrückung auf ein Potential gelegt wird, bei dem das Schaltelement eine Verbindung zwischen dem Akkumulator und einem Verbraucher hergestellt lässt. Es wird somit also eine elektrische Verbindung zur Entladung bereit gestellt, nicht zur Ladung des ersten Akkumulators. Überbrückung ist also beispielsweise so zu verstehen, dass alle Regelungseingriffe des Batteriemanagementsystems nicht mehr berücksichtigt werden und ohne Wirkung auf die weitere Entladung des Akkumulators oder den Lastschalter sind.

Die Spannung eines Akkumulators hängt in erster Näherung von dessen Ladezustand ab. Je geringer der Ladezustand, desto geringer ist auch die Spannung. Daher kann die von einem Akkumulator zur Verfügung gestellten Spannung auch als Maß für den Ladezustand angesehen werden. Ein entladener Akkumulator im Sinne der Erfindung ist ein Akkumulator der eine vom Batteriemanagement vorgegebene Spannung, die nahe der Entladeschlusspannung liegt oder die Entladeschlusspannung selbst ist, erreicht oder unterschritten hat. Die Höhe der Entladeschlussspannung ist abhängig vom jeweiligen Akkumulatortyp.

Alternativ ist ein entladener Akkumulator im Sinne der Erfindung ein Akkumulator der eine vom Batteriemanagement erste vorgegebene Spannung erreicht oder unterschritten hat, wobei die vorgegebene Spannung zwischen einer ersten vorgegebenen Spannung und einer zweiten vorgegebenen Spannung liegt. Bevorzugt ist die erste vorgegebene Spannung in einem Bereich von 1 % bis 5 % oberhalb der Entladeschlussspannung und die zweite Spannung in einem Bereich von 0 % bis 1 % oberhalb der Entladeschlussspannung. Die Höhe der Entladeschlussspannung ist abhängig vom jeweiligen Akkumulatortyp.

Batteriemanagementsysteme sind insbesondere bei Lithium-Ionen-Akkumulatoren aufgrund der komplexen Ladekennlinien üblich. Typische Funktionen eines Batteriemanagementsystems sind Zellenschutz, Ladekontrolle, Lastmanagement, Bestimmung des Ladezustandes, Bestimmung der Zellgesundheit, insbesondere Alterung, Restkapazität, Innenwiderstand und dergleichen, Ausbalancieren bei mehreren Zellen, Aufzeichnung der Historie, Kommunikation mit anderen Schiffssystemen sowie Temperaturüberwachung und Anpassen der Ladeschlussspannung.

Lastschalter im Sinne der Erfindung umfasst jede elektrische oder mechanische Schaltung, welche eine elektrische Verbindung herstellen und trennen kann. Neben einem mechanischen Schalter sind somit auch Halbleiter-Bauteile mit umfasst, welche eine elektrische Verbindung herstellen und trennen oder herstellen können. Beispielsweise sind der erste Akkumulator mit einem Lastausgang der Energiespeichervorrichtung über einen Gleichspannungswandler, auch Gleichstromsteller oder DC-DC-Wandler genannt, miteinander verbunden, um die vom ersten Akkumulator bereit gestellte Spannung an die am Lastausgang geforderte Ausgangsspannung anzupassen. Ein Beispiel für einen solchen Gleichspannungswandler ist zum Beispiel in der DE 10 2017 009 527 A1 in Figur 4 und der dazu gehörenden Beschreibung gezeigt. Der im Beispiel gezeigte Gleichspannungswandler weist zwei H-Brücken mit jeweils vier MOSFETS auf. Zur Trennung werden bevorzugt alle acht MOSFETS nichtleitend. Im Betrieb, also im elektrisch leitenden Zustand des Lastschalters werden immer jeweils zwei diagonal gegenüberliegende MOSFETS leitend und die anderen beiden diagonal gegenüberliegenden nichtleitend, wobei diese Schaltung ständig gewechselt wird. Diese Schaltung sorgt für die Umwandlung des Gleichstroms in Wechselstrom, der dann transformiert und auf der anderen Seite analog wieder in Gleichstrom verwandelt wird. Die symmetrische Ausführung erlaubt dabei sowohl ein Laden als auch ein Entladen des ersten Akkumulators. Das erfindungsgemäße Verbinden des ersten Akkumulators mit dem Lastausgang der Energiespeichervorrichtung mittels des ersten Lastschalters erfolgt somit dadurch, dass die Ansteuerelektronik des Gleichspannungswandlers ein Signal zur kontinuierlichen Ansteuerung des Gleichspannungswandlers erhält und so die elektrische Verbindung zwischen dem ersten Akkumulator und dem Lastausgang der Energiespeichervorrichtung im Sinne eines Lastschalters herstellt. Der Notschalter stellt bei halbleiterbasierten Schaltern folglich eine Schaltspannung bereit, die es der Treiberschaltung des halbleiterbasierten Schaltern oder dem des halbleiterbasierten Schalter selbst erlaubt einen Stromfluss zu ermöglichen. Das Beispiel soll nicht einschränkend verstanden werden. Umfasst vom Begriff Lastschalter sind alle schaltbaren, bidirektionalen und fachmännisch bekannten elektrischen Schaltungsanordnungen von Gleichspannungswandlern.

In einer weiteren Ausführungsform der Erfindung wird vor der Durchführung des oben genannten Schrittes geprüft, ob die gespeicherte elektrische Energie in der gesamten Energiespeichervorrichtung einen unteren Grenzwert unterschreitet, bevorzugt ist der Grenzwert insgesamt weniger als 5 % der maximal gespeicherten elektrischen Energie, besonders bevorzugt ist der Grenzwert weniger als 3 % der maximal gespeicherten elektrischen Energie. Hierdurch kann verhindert werden, dass die Überbrückung zu einem Zeitpunkt erfolgt, zu dem dieses nicht zwingend erforderlich ist. Da die Überbrückung auch gleichzeitig den Überhitzungsschutz deaktiviert, ist das Beschädigungsrisiko für die Energiespeichervorrichtung und die Umgebung der Energiespeichervorrichtung extrem, sodass dieser Betriebsmodus unbedingt vermieden werden sollte, solange dieser nicht aufgrund einer Gefahrensituation zwingend notwendig ist.

In einer weiteren Ausführungsform der Erfindung weist die Energiespeichervorrichtung wenigstens einen zweiten Akkumulator und ein zweites Batteriemanagementsystem auf, wobei der Notschalter auch zur Überbrückung des zweiten Batteriemanagementsystems ausgebildet ist. Selbstverständlich kann es sich um n Akkumulatoren mit n Batteriemanagementsystemen handeln, wobei jeweils ein Batteriemanagementsystem jeweils einen Akkumulator überwacht. Der Notschalter dient dazu, gleichzeitig alle Batteriemanagementsysteme zu überbrücken und so die gesamte noch verfügbare Energie zur Verfügung zu stellen.

In einer weiteren Ausführungsform der Erfindung weist die Energiespeichervorrichtung ein dem ersten Batteriemanagementsystem und dem zweiten Batteriemanagementsystem übergeordnetes Haupt-Batteriemanagementsystem auf, wobei der Notschalter auch zur Überbrückung des Haupt-Batteriemanagementsystems ausgebildet ist. Selbstverständlich kann es bei einer größeren Anzahl von Akkumulatoren auch noch Zwischenebenen von Batteriemanagementsystemen geben. Vorteilhafter Weise werden alle Batteriemanagementsysteme durch den einen Notschalter gleichzeitig deaktiviert.

In einer weiteren alternativen Ausführungsform der Erfindung weist die Energiespeichervorrichtung wenigstens einen zweiten Akkumulator, ein zweites Batteriemanagementsystem und einen zweiten Notschalter auf, wobei der zweite Notschalter zur Überbrückung des zweiten Batteriemanagementsystems ausgebildet ist. Hierdurch kann versucht werden, die Beschädigung der Akkumulatoren auf ein Minimum zu reduzieren, um für den Fall, dass das Unterseeboot noch zu retten ist, anschließend wenigstens auf einen Teil zurück greifen zu können, bei dem das Batteriemanagementsystem nicht überbrückt wurde.

In einer weiteren Ausführungsform der Erfindung kann nach der einmaligen Eingabe durch den Notschalter die Überbrückung des Batteriemanagementsystems nicht mehr aufgehoben werden. Da bei der Durchführung des Verfahrens es mit großer Wahrscheinlichkeit zu schwerwiegenden Beschädigungen kommt, würde ein Zurückschalten in den Ausgangszustand eine scheinbare Sicherheit des Systems vortäuschen, die nicht mehr gegeben ist. Daher ist es vorteilhaft, wenn nach Aktivierung des Verfahrens es keinen Weg zurück in den Regelbetrieb gibt, ohne dass eine grundlegende Wartung und Instandsetzung des Gesamtsystems erfolgt.

In einer weiteren Ausführungsform der Erfindung kann nach der einmaligen Eingabe durch den Notschalter keine Ladevorgang mehr vorgenommen werden. Würde ein Laden des ersten Akkumulators ohne Batteriemanagementsystem möglich sein, so wäre das Beschädigungsrisiko sehr hoch. Daher wird dieses vorzugsweise deaktiviert. Da das Verfahren erst in einer Situation durchgeführt wird, in der dem Unterseeboot auch keine weitere Energie zur Verfügung steht, wird auch kein Bedarf und keine Möglichkeit existieren, die Akkumulatoren erneut zu laden.

In einer weiteren Ausführungsform der Erfindung weist der Notschalter eine erste Eingabevorrichtung und eine zweite Eingabevorrichtung auf, wobei zur Überbrückung eine erste Eingabe an der ersten Eingabevorrichtung und eine zweite Eingabe einer zweiten Eingabevorrichtung notwendig ist. Durch die Trennung der ersten Eingabevorrichtung und der zweiten Eingabevorrichtung, wobei die erste Eingabevorrichtung die zweite Eingabevorrichtung bevorzugt beabstandet, besonders bevorzugt mehr als 2 m beabstandet sind, kann eine versehentliche Auslösung des Notschalters zuverlässig vermieden werden. Dieses bedeutet, dass der Notschalter wirklich nur im absoluten Gefahrenfall betätigt und somit das erfindungsgemäße Verfahren ausgeführt wird. Bevorzugt müssen die erste Eingabe und die zweite Eingabe gleichzeitig erfolgen. Die Gleichzeitigkeit der ersten Eingabe und der zweiten Eingabe insbesondere mit einer ausreichenden räumlichen Beabstandung der ersten Eingabevorrichtung und der zweiten Eingabevorrichtung erzwingen, dass für die Durchführung des Verfahrens zwei Personen benötigt werden, womit zwei Personen gleichzeitig ihren Willen erklären müssen, die Nachteile des erfindungsgemäßen Verfahrens in Kauf zu nehmen.

In einer weiteren Ausführungsform der Erfindung wird durch das Verfahren eine direkte elektrische Verbindung zwischen dem ersten Akkumulator und dem Lastausgang hergestellt. Im Normalfall wird bevorzugt eine galvanisch getrennte Verbindung hergestellt. Beispielsweise kann die direkte elektrische Verbinddung derart ausgeführt sein, dass ein erneutes Aufladen des Akkumulators verhindert wird.

In einer weiteren Ausführungsform der Erfindung wird der erste Akkumulator nach der Entladung durch das Verfahren irreversibel vom Lastausgang getrennt. Dieses soll sicherstellen, dass ein durch das Verfahren beschädigter Akkumulator erneut geladen und weiter betrieben werden kann.

In einer weiteren Ausführungsform der Erfindung erfolgt vor der Überbrückung des ersten Batteriemanagementsystems eine Überprüfung der Kommunikation des Batteriemanagementsystems. Beispielsweise kann hierbei abgefragt werden, ob bereits bekannte Beschädigungen am ersten Akkumulator eine Überbrückung sinnlos oder besonders gefährlich machen würde. Dieses kann insbesondere sinnvoll in einem System aus einer Vielzahl an Akkumulatoren und einer Vielzahl an Batteriemanagementsystemen sein. Ebenso können bereits registrierte Temperaturspitzen ein erhöhtes Risiko indizieren, sofern diese vom Batteriemanagementsystem bereits erfasst wurden.

In einer weiteren Ausführungsform der Erfindung in einem System mit einer Vielzahl an Akkumulatoren und einer Vielzahl an Batteriemanagementsystemen wird zunächst bei allen Batteriemanagementsystemen der Ladezustand der angeschlossenen Akkumulatoren abgefragt. Nur wenn hierbei keine ausreichende Kapazität mehr zur Verfügung steht wird die Überbrückung des ersten Batteriemanagementsystems durchgeführt.

In einem weiteren Aspekt betrifft die Erfindung ein Verfahren zum Betreiben eines Unterseebootes mit einer Energiespeichervorrichtung, wobei mit der Energiespeichervorrichtung das erfindungsgemäße Verfahren zur Überbrückung eines ersten Batteriemanagementsystems eines ersten Akkumulators durchführbar ist.

In einem weiteren Aspekt betrifft die Erfindung ein Unterseeboot mit einer Energiespeichervorrichtung. Die Energiespeichervorrichtung weist einen Lastausgang zur Übergabe elektrischer Energie an wenigstens einen Verbraucher auf. Beispielsweise handelt es sich hierbei um eine Sammelschiene, welche die elektrische Energie von verschiedenen Akkumulatoren sammelt und an das Bordnetz beispielsweise eines Unterseebootes übergibt. Dieses ist der Bereich, an dem die höchste Spannung anliegt, solange auch nur ein einziger Akkumulator noch über eine ausreichende Restladung verfügt, um die für einen Schaltvorgang notwendige Mindestspannung bereitzustellen. Die Energiespeichervorrichtung weist wenigstens einen ersten Akkumulator und einen zweiten Akkumulator auf. Üblicherweise weist die Energiespeichervorrichtung eine Vielzahl an Akkumulatoren auf. Die Akkumulatoren können bevorzugt in Modulen gruppiert angeordnet sein, weiter bevorzugt können die Module in Strängen gruppiert angeordnet sein. Ein Unterseeboot weist beispielsweise üblicherweise eine Energiespeichervorrichtung auf, welche etwa 10 bis 50 Stränge aufweist, wobei jeder Strang etwa 4 bis 10 Module aufweist. Ein Modul kann beispielsweise 20 bis 500 Akkumulatoren aufweisen. Die Energiespeichervorrichtung weist wenigstens ein erstes Batteriemanagementsystem für den ersten Akkumulator und ein zweites Batteriemanagementsystem für den zweiten Akkumulator auf. Zwischen dem ersten Akkumulator und dem ersten Batteriemanagementsystem ist ein erster Lastschalter angeordnet. Zwischen dem zweiten Akkumulator und dem zweiten Batteriemanagementsystem ist ein zweiter Lastschalter angeordnet. Der erste Lastschalter verbindet den ersten Akkumulator mit dem Lastausgang und der zweite Lastschalter verbindet den zweiten Akkumulator mit dem Lastausgang. Der jeweilige Lastschalter kann dabei bevorzugt ein auf Halbleiterschaltelementen beruhender Gleichspannungswandler sein, der vom Batteriemanagementsystem angesteuert werden kann. Der Vorteil ist, dass derartige Gleichspannungswandler eine variable Eingangsspannung in eine konstante Ausgangsspannung wandeln können.

Die Energiespeichervorrichtung weist erfindungsgemäß einen Notschalter auf. Der Notschalter ist zur Herstellung einer elektrischen Verbindung zwischen dem Lastausgang und dem ersten Lastschalter sowie zur Herstellung einer elektrischen Verbindung zwischen dem Lastausgang und dem zweiten Lastschalter ausgebildet.

In einer weiteren Ausführungsform der Erfindung weist der Notschalter eine erste Eingabevorrichtung auf, wobei die erste Eingabevorrichtung als mechanisch gegen unbeabsichtigtes Schalten gesicherter Schalter ausgebildet ist, zum Beispiel als Schlüsselschalter. Vorteil eines mechanisch gegen unbeabsichtigtes Schalten gesicherten Schalters ist, dass dieser praktisch nicht versehentlich ausgelöst werden kann. Bei dem beispielhaften Schlüsselschalter kann man den Schlüssel in den Schlüsselschalter stecken und den Schlüssel drehen und stellt damit sicher, dass der Benutzer genau weiß, dass durch diese Handlung eine dauerhafte Beschädigung Energiespeichervorrichtung auch wirklich in Kauf genommen wird, um den letzten Rest an zur Verfügung stehender elektrische Energie bereitzustellen.

In einer weiteren Ausführungsform der Erfindung weist der Notschalter eine zweite Eingabevorrichtung. Die erste Eingabevorrichtung ist bevorzugt ebenfalls als mechanisch gegen unbeabsichtigtes Schalten gesicherter Schalter ausgebildet. Die erste Eingabevorrichtung und die zweite Eingabevorrichtung weisen einen Abstand von wenigstens 2 m auf. Durch die Verwendung zweier Eingabevorrichtungen, welche beide beispielsweise als Schlüsselschalter ausgeführt sind, kann das Risiko einer ungewollten Auslösung weiter reduziert werden. Insbesondere, wenn die gleichzeitige Auslösung beider Schlüsselschalter notwendig ist, kann dieses nicht mehr nur durch eine einzelne Person erfolgen, sondern es ein koordiniertes Vorgehen von zwei Personen notwendig, was ein Versehen praktisch ausschließt.

In einer weiteren Ausführungsform der Erfindung weist die Energiespeichervorrichtung eine Vielzahl an Akkumulatoren auf. Die mehrere Akkumulatoren sind zu einem Modul zusammengefasst, mehrere Module sind zu einem Strang zusammengefasst. Jedes Modul weist ein Modul-Batteriemanagementsystem aufgrund jeder Strang weist ein Strang-Batteriemanagementsystem auf. Der Notschalter überbrückt alle Modul-Batteriemanagementsystem und alle Strang-Batteriemanagementsystem. Derartig gestaffelte Batteriemanagementsysteme sind üblich. Daher ist eine Überbrückung jeder Instanz nötig.

In einer weiteren Ausführungsform der Erfindung weist die Energiespeichervorrichtung eine Vielzahl der Akkumulatoren auf. Der Notschalter ist blockiert, sofern weniger als 50 %, bevorzugt weniger als 80 % aller Akkumulatoren, aufgrund des Entladezustands abgeschaltet sind.

Die Erfindung betrifft ein Unterseeboot mit einer erfindungsgemäßen Energiespeichervorrichtung. Während sich praktisch bei allen anderen Anwendungen kaum die Notwendigkeit ergibt, unter Zerstörung der Energiespeichervorrichtung die letzten Energiereserven zu mobilisieren und insbesondere das Brandrisiko in Kauf zu nehmen, so ist bei einem Unterseeboot, insbesondere welche sich gerade getaucht befindet, die Situation völlig anders. Steht noch genügend Energie zur Verfügung, um das Unterseeboot auftauchen zu lassen, so kann die Besatzung evakuiert und somit wenigstens das Leben der Besatzung gerettet werden.

Nachfolgend ist das erfindungsgemäße Unterseeboot anhand eines in den Zeichnungen dargestellten Ausführungsbeispiels näher erläutert.
- Fig. 1: Unterseeboot
- Fig. 2: erste Energiespeichervorrichtung
- Fig. 3: zweite Energiespeichervorrichtung

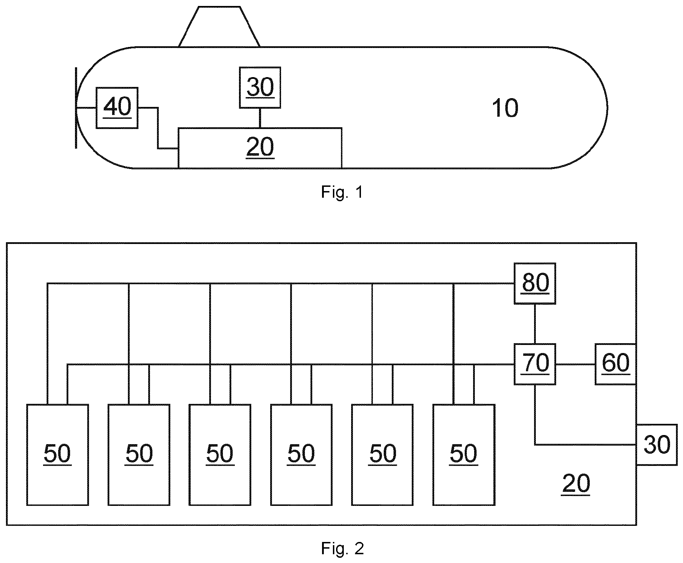

Fig. 1 zeigt ein erfindungsgemäßes Unterseeboot 10 stark vereinfacht schematisch. Das Unterseeboot 10 weist eine Energiespeichervorrichtung 20 auf, welche mittels eines Notschalters 30 erfindungsgemäß betrieben werden kann. Hierdurch kann die letzte noch verfügbare Energie beispielsweise an einen Motor 40 geleitet werden und das Unterseeboot auftauchen.

Fig. 2 zeigt eine erste Energiespeichervorrichtung 20 mit einem Strang aus sechs Akkumulatoren 50. Die Akkumulatoren 50 können selbst vorzugsweise in Form von Modulen mit einer Mehrzahl an elektrochemischen Zellen ausgeführt sein. Die Akkumulatoren 50 werden von einem Batteriemanagementsystem 80 überwacht, welches beispielsweise Spannung und Temperatur erfasst. Die elektrische Energie kann aus den Akkumulatoren 50 über den Lastausgang 60 an das Unterseeboot 10 abgegeben werden. Um den Strang von Netz zu trennen, weist die Energiespeichervorrichtung 20 einen Lastschalter 70 auf, der über das Batteriemanagementsystem 80 geschaltet werden kann. Zur Durchführung des erfindungsgemäßen Verfahrens kann der Notschalter 30 den Lastschalter 70 direkt schalten und überbrückt somit das Batteriemanagementsystem 80. Dieses kann zwar noch immer Warnmeldungen zum Beispiel zu Ladezustand und Temperatur an andere Systeme des Unterseebootes 10 melden, kann aber nicht mehr den Strang vom Netz trennen.

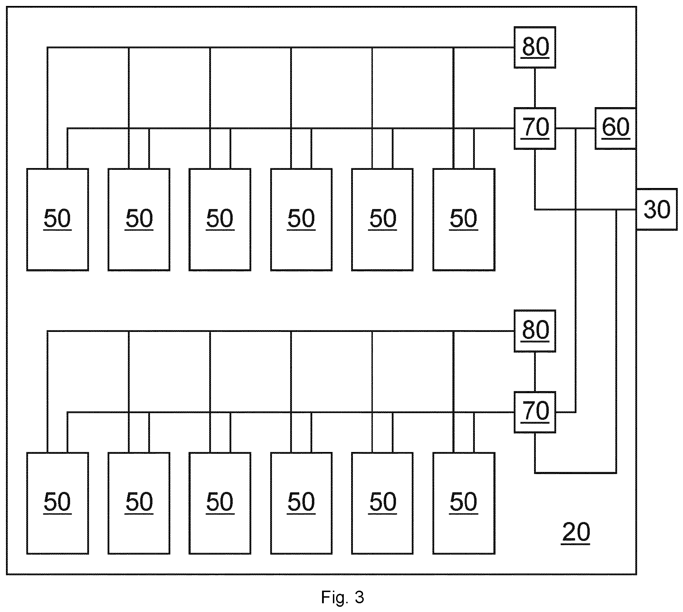

Die in Fig. 3 gezeigte zweite Energiespeichervorrichtung 20 unterscheidet sich dadurch, dass hier zwei Stränge mit jeweils sechs Akkumulatoren und jeweils einem eigenem Batteriemanagementsystem 80 aufweist. Beide Lastschalter 70 können zusammen und gleichzeitig durch den Notschalter 30 betätigt werden, sodass beide Batteriemanagementsysteme 80 gleichzeitig überbrückt werden.

Bezugszeichen:
- 10: Unterseeboot
- 20: Energiespeichervorrichtung
- 30: Notschalter
- 40: Motor
- 50: Akkumulator
- 60: Lastausgang
- 70: Lastschalter
- 80: Batteriemanagementsystem

## Patentansprüche

1. Verfahren zur Bereitstellung von Energie auf einem Unterseeboot, wobei das Verfahren auf dem Unterseeboot mit einer Energiespeichervorrichtung angewendet wird, wobei die Energiespeichervorrichtung wenigstens einen ersten Akkumulator und ein erstes Batteriemanagementsystem aufweist, wobei zur Bereitstellung der Energie eine Überbrückung des ersten Batteriemanagementsystems des ersten Akkumulators zur Ermöglichung einer Tiefentladung des ersten Akkumulators durchgeführt wird, wobei als erster Akkumulator ein entladener erster Akkumulator ausgewählt wird, wobei das Batteriemanagementsystem den ersten Akkumulator mit einem ersten Lastschalter von einem Lastausgang der Energiespeichervorrichtung getrennt hat, **dadurch gekennzeichnet, dass** zur Überbrückung des ersten Batteriemanagementsystems ein Notschalter verwendet wird, wobei durch den Notschalter eine Schaltspannung auf einen ersten Lastschalter anlegt wird, wodurch der erste Lastschalter den ersten Akkumulator mit einem Lastausgang der Energiespeichervorrichtung verbindet.

2. Verfahren nach Anspruch 1, **dadurch gekennzeichnet, dass** vor der Durchführung der Überbrückung geprüft wird, ob die gespeicherte Energie in der Energiespeichervorrichtung weniger als 5 % der maximal gespeicherten Energie, bevorzugt weniger als 3 % der maximal gespeicherten Energie, entspricht.

3. Verfahren nach einem der vorstehenden Ansprüche, **dadurch gekennzeichnet, dass** die Energiespeichervorrichtung wenigstens einen zweiten Akkumulator und ein zweites Batteriemanagementsystem aufweist, wobei der Notschalter auch zur Überbrückung des zweiten Batteriemanagementsystems ausgebildet ist.

4. Verfahren nach einem der vorstehenden Ansprüche, **dadurch gekennzeichnet, dass** der Notschalter eine erste Eingabevorrichtung und eine zweite Eingabevorrichtung aufweist, wobei zur Überbrückung eine erste Eingabe an der ersten Eingabevorrichtung und eine zweite Eingabe einer zweiten Eingabevorrichtung notwendig ist, wobei bevorzugt die erste Eingabe und die zweite Eingabe gleichzeitig erfolgen müssen.

5. Verfahren nach einem der vorstehenden Ansprüche, **dadurch gekennzeichnet, dass** nach der einmaligen Eingabe durch den Notschalter die Überbrückung des Batteriemanagementsystems nicht mehr aufgehoben werden kann.

6. Unterseeboot mit einer Energiespeichervorrichtung, wobei die Energiespeichervorrichtung eine Lastausgang zur Übergabe elektrischer Energie an wenigstens einen Verbraucher aufweist, wobei die Energiespeichervorrichtung wenigstens einen ersten Akkumulator und einen zweiten Akkumulator aufweist, wobei die Energiespeichervorrichtung wenigstens ein erstes Batteriemanagementsystem für den ersten Akkumulator und ein zweites Batteriemanagementsystem für den zweiten Akkumulator aufweist, wobei zwischen dem ersten Akkumulator und dem ersten Batteriemanagementsystem ein erster Lastschalter angeordnet ist, wobei zwischen dem zweiten Akkumulator und dem zweiten Batteriemanagementsystem ein zweiter Lastschalt angeordnet ist, wobei der erste Lastschalter den ersten Akkumulator mit dem Lastausgang verbindet, wobei der zweite Lastschalter den zweiten Akkumulator mit dem Lastausgang verbindet, **dadurch gekennzeichnet, dass** die Energiespeichervorrichtung einen Notschalter zur Ermöglichung einer Tiefentladung des ersten Akkumulators aufweist, wobei der Notschalter zur Herstellung einer elektrischen Verbindung zwischen dem Lastausgang und dem ersten Lastschalter sowie zur Herstellung einer elektrischen Verbindung zwischen dem Lastausgang und dem zweiten Lastschalter ausgebildet ist.

7. Unterseeboot nach Anspruch 6, **dadurch gekennzeichnet, dass** der Notschalter eine erste Eingabevorrichtung aufweist, wobei die erste Eingabevorrichtung als Schlüsselschalter ausgebildet ist.

8. Unterseeboot nach Anspruch 7, **dadurch gekennzeichnet, dass** der Notschalter eine zweite Eingabevorrichtung aufweist, wobei die erste Eingabevorrichtung als Schlüsselschalter ausgebildet ist, wobei die erste Eingabevorrichtung und die zweite Eingabevorrichtung einen Abstand von wenigstens 2 m aufweisen.

9. Unterseeboot nach einem der Ansprüche 6 bis 8, **dadurch gekennzeichnet, dass** die Energiespeichervorrichtung eine Vielzahl an Akkumulatoren aufweist, wobei mehrere Akkumulatoren zu einem Modul zusammengefasst sind, wobei mehrere Module zu einem Strang zusammengefasst sind, wobei jedes Modul ein Modul-Batteriemanagementsystem aufweist, wobei jeder Strang ein Strang-Batteriemanagementsystem aufweist, wobei der Notschalter alle Modul-Batteriemanagementsystem und alle Strang-Batteriemanagementsystem überbrückt.

10. Unterseeboot nach einem der Ansprüche 6 bis 9, **dadurch gekennzeichnet, dass** die Energiespeichervorrichtung eine Vielzahl der Akkumulatoren aufweist, wobei der Notschalter blockiert ist, sofern weniger als 50 %, bevorzugt weniger als 80 % aller Akkumulatoren, aufgrund des Entladezustands abgeschaltet sind.

## Claims

1. A method for providing energy on a submarine, wherein the method on the submarine with an energy storage device is applied, wherein the energy storage device has at least one first battery and one first battery management system, wherein for providing the energy, a bypassing of the first battery management system of the first battery is carried out in order to enable a deep discharge of the first battery, wherein a discharged first battery is selected as a first battery, wherein the battery management system has disconnected the first battery from a load output of the energy storage device with a first load switch, **characterized in that** an emergency switch is used for bypassing the first battery management system, wherein a switching voltage is applied to a first load switch by means of the emergency switch, whereby the first load switch connects the first battery to a load output of the energy storage device.

2. The method as claimed in claim 1, **characterized in that** before carrying out the bypassing, it is checked whether the stored energy in the energy storage device corresponds to less than 5 % of the maximum stored energy, preferably less than 3 % of the maximum stored energy.

3. The method as claimed in one of the preceding claims, **characterized in that** the energy storage device has at least one second battery and one second battery management system, wherein the emergency switch is also designed for bypassing the second battery management system.

4. The method as claimed in one of the preceding claims, **characterized in that** the emergency switch has a first input device and a second input device, wherein a first input at the first input device and a second input of a second input device is necessary for bypassing, wherein the first input and the second input preferably must take place at the same time.

5. The method as claimed in one of the preceding claims, **characterized in that** bypassing the battery management system can no longer be cancelled after the single input by the emergency switch.

6. Submarine having an energy storage device wherein the energy storage device has a load output for transferring electrical energy to at least one consumer, wherein the energy storage device has at least one first battery and one second battery, wherein the energy storage device has at least one first battery management system for the first battery and one second battery management system for the second battery, wherein a first load switch is arranged between the first battery and the first battery management system, wherein a second load switch is arranged between the second battery and the second battery management system, wherein the first load switch connects the first battery to the load output, wherein the second load switch connects the second battery to the load output, **characterized in that** the energy storage device has an emergency switch to enable deep discharge of the first accumulator, wherein the emergency switch is designed for producing an electrical connection between the load output and the first load switch as well as for producing an electrical connection between the load output and the second load switch.

7. The submarine as claimed in claim 6, **characterized in that** the emergency switch has a first input device, wherein the first input device is designed as a key switch.

8. The submarine as claimed in claim 7, **characterized in that** the emergency switch has a second input device, wherein the first input device is designed as a key switch, wherein the first input device and the second input device have a distance of at least 2 m.

9. The submarine as claimed in one of claims 6 to 8, **characterized in that** the energy storage device has a multiplicity of batteries, wherein a plurality of batteries are combined to form a module, wherein a plurality of modules are combined to form a string, wherein each module has a module battery management system, wherein each string has a string battery management system, wherein the emergency switch bypasses all module battery management systems and all string battery management systems.

10. The submarine as claimed in one of claims 6 to 9, **characterized in that** the energy storage device has a multiplicity of the batteries, wherein the emergency switch is blocked provided that less than 50 %, preferably less than 80 % of all batteries are switched off as a result of the discharge state.

## Revendications

1. Procédé pour fournir de l'énergie sur un sous-marin, dans lequel le procédé est appliqué sur le sous-marin avec un dispositif de stockage d'énergie, dans lequel le dispositif de stockage d'énergie comporte au moins une première batterie et un premier système de gestion de batterie, dans lequel, pour fournir l'énergie, un contournement du premier système de gestion de batterie de la première batterie est effectué afin de permettre une décharge profonde de la première batterie, dans lequel une première batterie déchargée est sélectionnée comme première batterie, dans lequel le système de gestion de batterie a déconnecté la première batterie d'une sortie de charge du dispositif de stockage d'énergie à l'aide d'un premier commutateur de charge, **caractérisé en ce qu'**un commutateur de secours est utilisé pour contourner le premier système de gestion de batterie, dans lequel une tension de commutation est appliquée à un premier commutateur de charge au moyen du commutateur de secours, de sorte que le premier commutateur de charge connecte la première batterie à une sortie de charge du dispositif de stockage d'énergie .

2. Procédé selon la revendication 1, **caractérisé en ce qu'**avant d'effectuer le contournement, on vérifie si l'énergie stockée dans le dispositif de stockage d'énergie correspond à moins de 5 % de l'énergie maximale stockée, de préférence à moins de 3 % de l'énergie maximale stockée.

3. Procédé selon l'une des revendications précédentes, **caractérisé en ce que** le dispositif de stockage d'énergie comporte au moins une deuxième batterie et un deuxième système de gestion de batterie, le commutateur d'urgence étant également conçu pour contourner le deuxième système de gestion de batterie.

4. Procédé selon l'une des revendications précédentes, **caractérisé en ce que** le commutateur d'urgence comporte un premier dispositif d'entrée et un deuxième dispositif d'entrée, une première entrée au niveau du premier dispositif d'entrée et une deuxième entrée au niveau d'un deuxième dispositif d'entrée étant nécessaires pour le contournement, la première entrée et la deuxième entrée devant de préférence avoir lieu simultanément.

5. Procédé selon l'une des revendications précédentes, **caractérisé en ce que** le contournement du système de gestion de batterie ne peut plus être annulé après la seule entrée par l'interrupteur d'urgence.

6. Sous-marin équipé d'un dispositif de stockage d'énergie, dans lequel le dispositif de stockage d'énergie comporte une sortie de charge pour transférer l'énergie électrique à au moins un consommateur, dans lequel le dispositif de stockage d'énergie comporte au moins une première batterie et une deuxième batterie, dans lequel le dispositif de stockage d'énergie comporte au moins un premier système de gestion de batterie pour la première batterie et un deuxième système de gestion de batterie pour la deuxième batterie, dans lequel un premier commutateur de charge est disposé entre la première batterie et le premier système de gestion de batterie, dans lequel un deuxième commutateur de charge est disposé entre la deuxième batterie et le deuxième système de gestion de batterie, dans lequel le premier commutateur de charge relie la première batterie à la sortie de charge, dans lequel le deuxième commutateur de charge relie la deuxième batterie à la sortie de charge, **caractérisé en ce que** le dispositif de stockage d'énergie comporte un commutateur de secours pour permettre une décharge profonde du premier accumulateur, le commutateur de secours étant conçu pour établir une connexion électrique entre la sortie de charge et le premier commutateur de charge ainsi que pour établir une connexion électrique entre la sortie de charge et le deuxième commutateur de charge.

7. Le sous-marin selon la revendication 6, **caractérisé en ce que** le commutateur de secours comporte un premier dispositif d'entrée, le premier dispositif d'entrée étant conçu comme un interrupteur à clé.

8. Le sous-marin selon la revendication 7, **caractérisé en ce que** le commutateur de secours comporte un deuxième dispositif d'entrée, le premier dispositif d'entrée étant conçu comme un interrupteur à clé, le premier dispositif d'entrée et le deuxième dispositif d'entrée étant espacés d'au moins 2 m.

9. Le sous-marin selon l'une des revendications 6 à 8, **caractérisé en ce que** le dispositif de stockage d'énergie comporte une pluralité de batteries, dans lequel une pluralité de batteries sont combinées pour former un module, dans lequel une pluralité de modules sont combinés pour former une chaîne, dans lequel chaque module comporte un système de gestion de batterie de module, dans lequel chaque chaîne comporte un système de gestion de batterie de chaîne, dans lequel le commutateur de secours contourne tous les systèmes de gestion de batterie de module et tous les systèmes de gestion de batterie de chaîne.

10. Le sous-marin selon l'une des revendications 6 à 9, **caractérisé en ce que** le dispositif de stockage d'énergie comporte une multiplicité de batteries, dans lequel le commutateur d'urgence est bloqué à condition que moins de 50 %, de préférence moins de 80 % de toutes les batteries soient désactivées en raison de l'état de décharge.
